Europäisches Patentamt

European Patent Office

Office européen des brevets

(19)

(11) Publication number: **0 157 042**
A2

# (12) EUROPEAN PATENT APPLICATION

(21) Application number: 84307328.9

(22) Date of filing: 24.10.84

(51) Int. Cl.⁴: **G 06 K 7/016**

(30) Priority: 04.04.84 GB 8408715

(43) Date of publication of application: 09.10.85
Bulletin 85/41

(84) Designated Contracting States: **AT BE CH DE FR GB IT
LI LU NL SE**

(71) Applicant: **RIGBY ELECTRONICS GROUP PLC., Royal
Oak Trading Estate Hilton Square, Pendlebury
Manchester, M27 1DL (GB)**

(72) Inventor: **Austin, Kenneth, 10 Applefield, Hartford
Northwich Cheshire (GB)**

(74) Representative: **Downey, William Gerrard et al, WILSON,
GUNN, ELLIS & CO. 41 Royal Exchange Cross Street,
Manchester M2 7BD (GB)**

(54) Electronic data reader/writer.

(57) A data card, such as a cash card, bears a magnetic strip on which data may be magnetically stored and an optical panel comprising a series of parallel black stripes. Apparatus for use with the card has an optical infra-red reader (2), a magnetic read/write device (3) and signal processing circuitry (6). Reader (2) permits the velocity of travel of the card relative to the apparatus on insertion by the user to be sensed, which in turn enables magnetically encoded information to be read from the magnetic strip and processed without corruption. The apparatus and card can therefore function without the necessity for a complex and expensive card transport.

-1 -

ELECTRONIC DATA READER/WRITER

The present invention relates to apparatus for reading data from or writing data on a substrate, to a method of reading data from or writing data on a substrate and to a substrate for storing such data.

Data bearing substrates, generally known as cards, are already known. The data is stored on a magnetic strip usually on the back of the card. In use, the card is fed to a card reader normally through a slot in the housing of the reader. The reader includes a magnetic reading head and a mechanism for moving the card and head relative to one another so that the head traverses the magnetic strip usually at constant speed. The most common arrangement is to drive the card beneath the head although the head, or indeed both head and card could be driven if desired. This drive mechanism removes any dependence of the reader on the speed and manner of insertion of the card into the slot by the card user which avoids corruption of data resulting from differences between the rate at which data is written on the magnetic strip and the rate at which data is read from the strip. However, it greatly increases the complexity and cost of the reader.

According to one aspect of the present invention there is provided apparatus for reading data from or writing data to a substrate, comprising a head for reading or writing data, optical means for enabling the position of the substrate relative to the head to be determined, and means for controlling the rate at which data is acted upon in dependence upon the position determined by the optical means.

According to another aspect of the present invention there is provided a method of reading data from or writing data to a substrate including the steps of scanning optical indicia on the substrate whilst simultaneously reading or writing the data, processing the optical indicia scanned in order to determine the position of the substrate and controlling the reading or writing of data in dependence on the position of the substrate so determined.

According to a further aspect of the invention, there is provided a substrate for use with data reading and/or writing apparatus comprising an area thereon for storing data and means for enabling the position of the substrate in the apparatus to be determined.

In order that the invention may be more clearly understood, one embodiment thereof will now be described, by way of example, with reference to the accompanying drawings, in which:-

Figure 1 shows a diagram of apparatus according to the invention,

Figure 2 is a plan view of a substrate in the form of a card for use with the apparatus of Figure 1,

Figure 3 is an underplan view of the card of Figure 2,

Figure 4 is a magnified diagrammatic sectional partial view through the card of Figures 2 and 3.

Figure 5 shows a block circuit diagram of the apparatus of Figure 1,

Figure 6 shows a hardware implementation of a desired software mode of operation of the apparatus of Figure 5.

-4-

Figure 7 depicts a reading and writing operation;

Figure 8 shows a modification of the circuit of Figure 5;

Figure 9 shows an alternative form of data encoding for the card; and

Figure 10 shows a modification of the card shown in Figure 2.

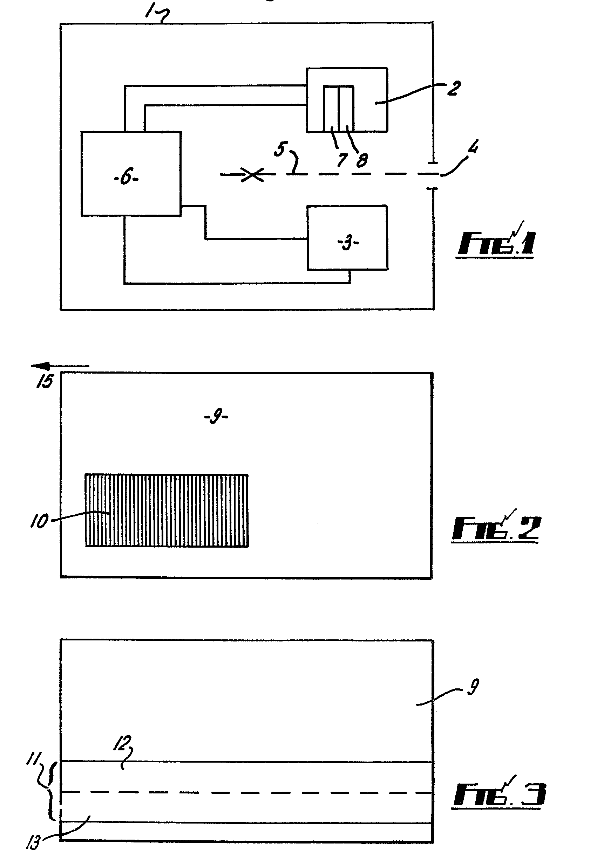

Referring to Figure 1, the apparatus comprises a body 1 housing an optical infra-red reader 2 and a magnetic read/write device 3 comprising two read/write heads 3A and 3B. The housing defines a slot 4 into which a card 9 to be read or written on may be inserted. The reader 2 and device 3 are disposed on opposite sides respectively of a path of travel 5 that the card follows on insertion into the slot 4. Signal processing circuity 6 interconnects the optical reader and read/write head. The optical infra-red reader comprises two reader heads 7 and 8 displaced from each other along the path of travel 5 for a purpose to be described later.

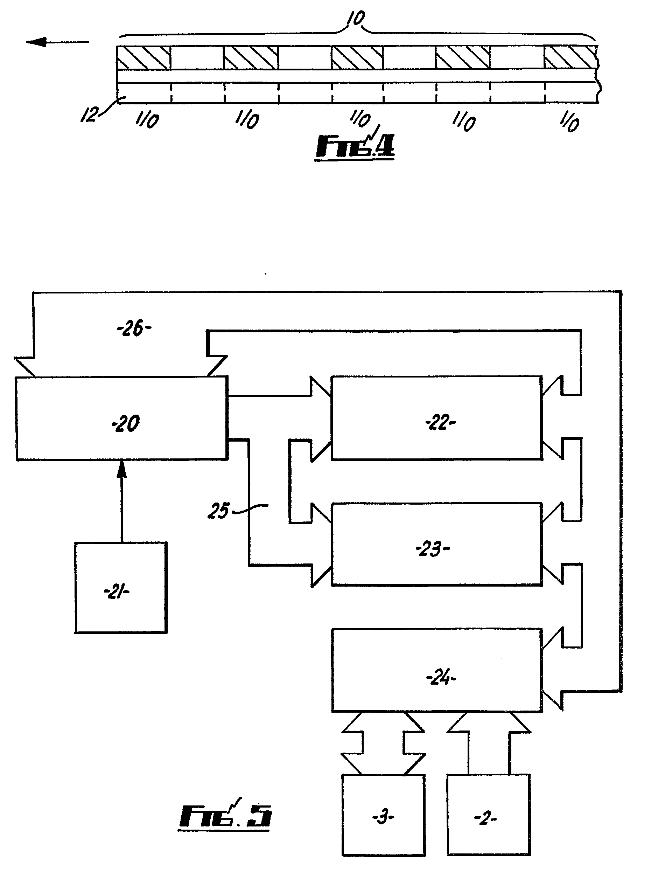

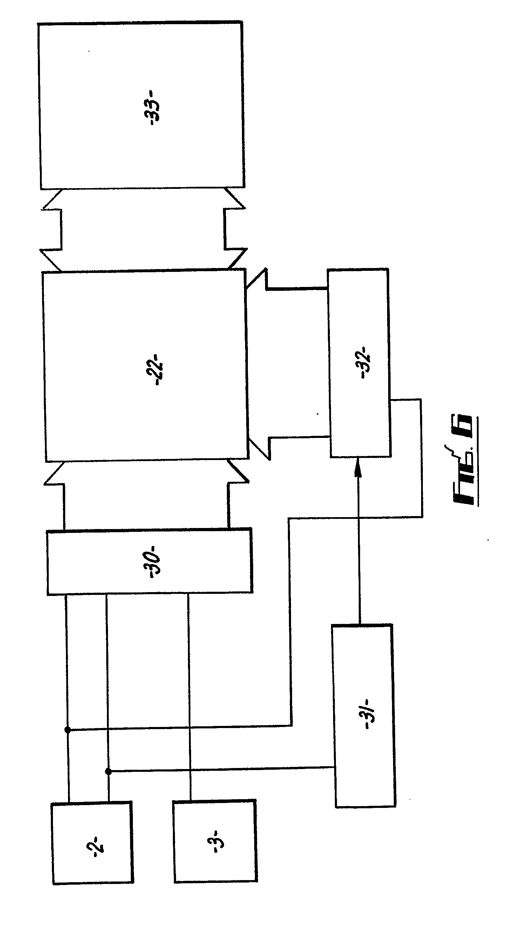

Referring to Figures 2 and 3, one surface (Figure 2) of the card 9 comprises a panel 10 composed of a plurality of parallel spaced black lines. the number of lines drawn in the Figure is given only by way of example. In practice, it is expected that about seventy lines will be provided, although more or less could be provided depending upon individual circumstances and requirements. The other surface (Figure 3) of the card comprises a strip 11 of magnetic material having two tracks one 12 a working data track and one 13 a back up track.

When the card is pushed into the slot 4 in the direction of arrow 15, the black lines are read by the two heads 7 and 8 of the optical reader. The signals returned by these two heads enable the position, speed of travel and direction of travel of the card in the slot to be determined.    Counting the number of stripes sensed with respect to time gives the position and speed of insertion.    The sequence of black stripe then no stripe sensed gives the direction of travel.    For example if both heads, which are contained within the width of a single black stripe, sense the presence of a stripe and then immediately afterwards the leading head 7  senses no stripe the card is travelling out of the slot.    If, on the otherhand lagging head 8 senses no stripe immediately after both heads sense a stripe then the card is travelling into the slot 4.

This optical  reader therefore enables the position of the card within the slot to be accurately determined and continously monitored.    The data contained on the magnetic  strip is effectively tied to the black stripes on the optical panel 10. By formatting this strip the apparatus can be programmed to accept or supply data read by device 3 depending upon the position, speed and direction of travel of the card. To take a basic digital case, if a single data bit, either '1' or '0' pulses or no pulses are provided for every black stripe, the apparatus will be programmed to accept a number of bits corresponding to the number of stripes read. In this way data is made independent of the speed of insertion of the card and data corruption avoided. Of course the card may be withdrawn slightly after being inserted. This is catered for by having a register as part of the signal processing circuitry 6 which counts down as well as up and which therefore at all times gives a readout representing the number of black stripes downstream of the reader 2. If the card is only half inserted then the optical reader will recognise this and further acceptance of data will be halted until further movement is sensed.

The apparatus operates whether data is to be read from or written to the card data being released for storage on the card only at the rate acceptable having regard to the speed and direction of

0157042

-7-

movement of the card. Cards such as cashcards where the writing of an updated total on the card is necessary following a transaction in addition to cards which simply supply stored information can therefore be handled by the system.

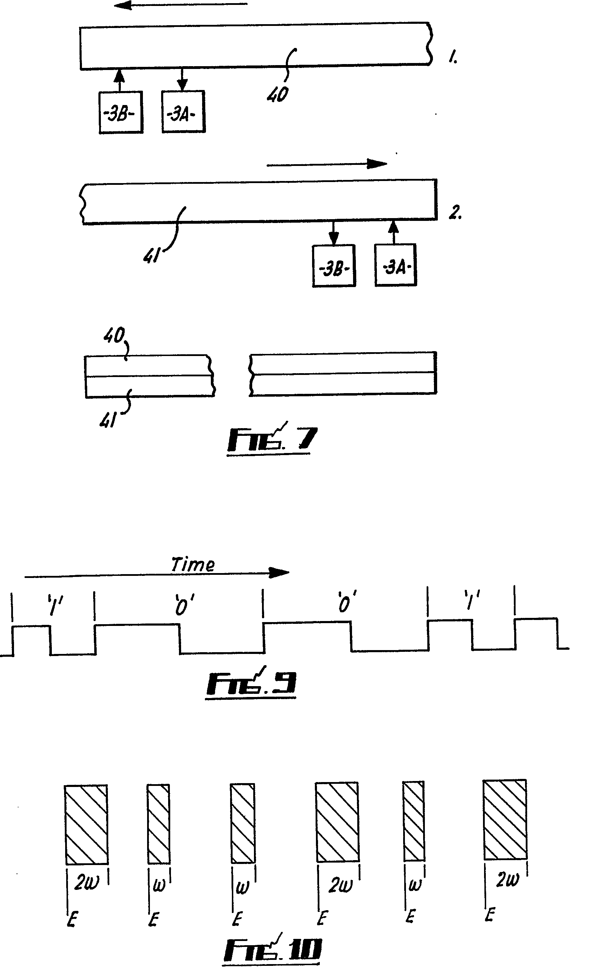

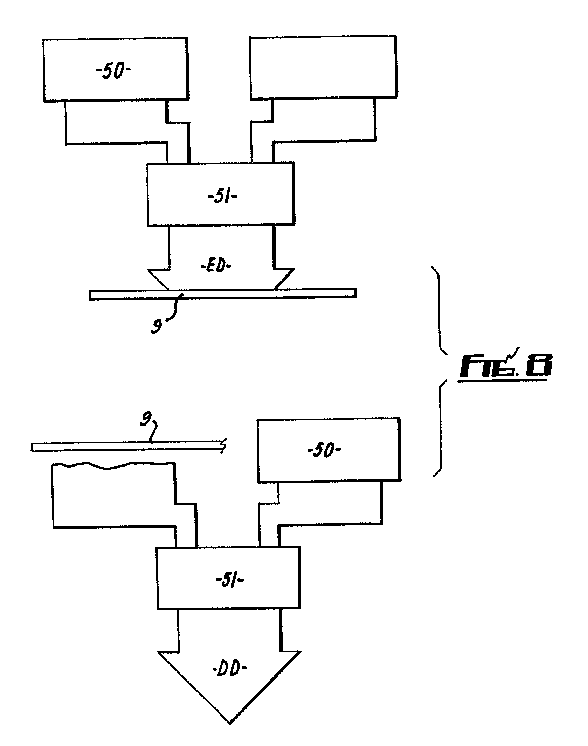

Operation of the above described apparatus with a cashcard on which updated totals are written following repeated transactions will now be described with reference to Figures 5 and 6. Figure 5 is a block circuit diagram of the apparatus. This circuitry comprises a microprocessor 20, system clock 21, random access memory 22, read only memory 23, input/output logic 24 connected as shown by address and data buses 25 and 26. Logic 24 comprises tone generation circuitry and tone decoding circuitry, to read and write data tones onto the magnetic strip. The data information is stored in a serial form on the magnetic strip. It is therefore necessary to compress the data into words of 8 bits length (a byte) in order for any transaction alterations to be made. The microprocessor 20 and program store 23 work by simulating in software the operation of a shift register 30, divide by eight counter 31, up/down ripple counter 32. In order that the operation of the program store can be understood a corresponding hardware implementation will be described with reference to Figure 6.

Each data bit is synchronised to an optical stripe 10 and in effect can be clocked into the bi-directional shift register 30, using the optical stripe. After eight data bits have been clocked in, the binary ripple counter 32 would increment its address and load the eight bits into the random access memory device 22. When all the addresses hold valid data the contents could be read and altered as necessary. When a transaction is complete the new memory totals are written onto the card by loading the shift register 30 in parallel and shifting each bit serially out to the read/write head 3, each bit would be synchronised (clocked) by the optical stripe. As stated above, in the preferred embodiment the operation would be simulated by the microprocessor and program store.

Input/output logic 24 would send tones or no tones to represent a logical '1' or a logical '0'. The input/output logic would also decode tones or no tones from the head to represent a logical '1' or a logical '0'. The period of tones or no tones to represent data is synchronise to the falling edge of the output of the optical heads in relation to the optical strip. As previously mentioned to read data from the card, the card is inserted into the reader aperture 4. As the card traverses the

-9-

reader mechanism 3, data is read through read/write head 3A. The data is then altered in relation to the transaction calculation bit by bit. The modified bit is then written to the same sector of the card using read/write head 3B. This process continues for each sector until the card is fully inserted and has completed its travel. When the card is removed the data that was written during insertion is verified. This read verify operation is performed by read/write head 3B, and any data inaccuracies are corrected through head 3A.

Referring to Figure 7, a further aid to reliable read/writing operation may be facilitated by writing the data twice, utilising two separate read/write tracks 40, 41 reading and writing in opposite directions. Should the data be written incorrectly, on the working track 40 at the start of the return travel of the data card, the same data will be stored at the end of the card travel on the opposite, copy track 41. Respective, heads would be provided for the two tracks.

Data could be stored on the card in an encrypted format to prevent unauthorised copying. A block circuit diagram of a modified apparatus providing for encrypting of data ED and decrypting of data DD is shown in Figure 8.  This comprises a key generator 50 and modulo 2 addition 51.  As each byte is stored in random access memory, the microprocessor can be utilised to perform modulo 2 addition combining the data with 8 bits of data supplied by a non-linear key generator.  The key generator would also be implemented in software.  Those skilled in the art will readily understand the principles of non-linear key generators and modulo 2 addition.  In the case of apparatus linked to a central control point, a series of random security numbers could be written on each card as each transaction is completed.  A copy of each of these numbers would be stored at the central control point, and as each transaction is completed the apparatus would check with the central control point to ensure that the last random number was a duplicate of the record copy before a new security number was issued.  If a card was copied by an unauthorised person, the two identical cards could not be used in the system (original and copy), as a transaction is completed a new security code is written onto the card, and when two identical cards are used in the system one card would not have the updated security code, then when a transaction is attempted with the incorrect code, use of both cards would be inhibited by the

-11-

system.

Data may be laid down on the magnetic strip on the reverse of the card by means other than those described above.   For example, data may be encoded on the magnetic strip 11 of the card using a process called frequency shift keying F.S.K., which means that each of the two logic states (logic "0", and  logic "1") are generally represented by a cycle of a specific frequency. The two frequencies are chosen so that the difference or ratio between them is large, typically 2 to 1 to ease the timing tolerance problems associated with generating them, and detecting the difference between them when reading back.   This arrangement is shown diagrammatically in Figure 9.    The logic level represented by the lower frequency will occupy more space on the  magnetic track than the higher frequency.    This means that the storage capacity depends on the ratio of logic "0" to logic "1" for the entire stored data.    The optical track becomes asynchronous to the magnetic data.  The optical track still provides information vital to the operation of the system, e.g. velocity (speed and direction), and position, The velocity information is used by the control logic to determine the bit timeing in such a way that velocity becomes common mode and the rate of writing can be adjusted to accommodate a large range of card speeds.

The system could accommodate pulse code modulation technique of data encoding such as the Manchester

-12-

encoding method, or any other system that falls within the specifications of the reader/writer and control logic. The system will be able to satisfy the ISO standards laid down for cards in banking use.

Data could also be stored on the stripes of the optical panel 10 in addition to using the stripes to supply card velocity and position information to the reader writer control. This could be achieved for example by varying the width of the lines making up the optical track. The leading edge E or some other reference point would always be in the same position (i.e. equally spaced) so that accurate velocity information can still be conveyed to the control circuitry. A practical example would be to represent a logic "0" as a stripe of width w, and a logic 1 as a stripe of width 2w. Such an arrangement is illustrated diagrammatically in Figure 10. Using this method, a message could be stored having a bit length equal to the number of stripes on the card. This message would be non-volatile, and could indicate area of usage, for example, a factor associated with the use of the card such as geographical area of use or an indentifying code of the user. The information could be carried in the spaces between the lines, and the above timing is arbitrary.

A battery could be added to the circuitry to allow operation if the mains power fails. This would only be required if the circuitry holds data for writing to

-13-

card, and the mains power fails (accidentally, or as a deliberate attempt at fraud), before the data is written.     If a write to the card is not required or if a battery powered write is successfully completed, the circuitry will switch the battery supply off when the mains fails, to conserve the charge.    The battery could be a rechargable type such as nickel/cadmium.

The above described apparatus enables the insertion  of the card to be utilised for data reading and writing operations and removes the necessity for a complex and expensive linear card feed device.

It will be appreciated that the above embodiment has been described by way of example only and that many variations are possible without departing from the scope of the invention.

-14-

CLAIMS

1. Apparatus for reading data from or writing data to a substrate, comprising a head (3) for reading or writing data, characterised by optical means (2) for enabling the position of the substrate relative to the head (3) to be determined, and means (6) for controlling the rate at which data is acted upon in dependence upon the position determined by the optical means.

2. Apparatus as claimed in claim 1, in which the optical means (2) comprises two reading heads (7 and 8) displaced from one another in a direction in which, in use, the heads and substrate move relative to each other.

3. Apparatus as claimed in claim 1 or 2, in which the optical means (2) are infra-red.

4. Apparatus as claimed in any preceding claim, in which the head (3) for reading and writing data is magnetic.

5. Apparatus as claimed in any preceding claim, in which the means for controlling the rate at which data is acted upon comprises signal processing circuitry (6).

6. Apparatus as claimed in claim 5, in which the signal processing circuitry (6) comprises logic circuitry (24) which incorporates tone generation and tone decoding circuitry to read and write tones on the substrate.

7. Apparatus as claimed in claim 5 or 6, in which the signal processing circuitry (6) includes means for encrypting and decrypting.

8. Apparatus as claimed in claim 5, 6 or 7, in which the signal processing circuitry (6) comprises a microprocessor (20) and program store (23).

9. Apparatus as claimed in claim 8, in which the microprocessor and program store are operative to simulate in software the operation of a shift register (30), divide by counter (31) and up/down ripple counter (32).

10. Apparatus as claimed in any preceding claim in which two heads are provided for use with two

0157042

-16-

data tracks on the substrate.

11. Apparatus as claimed in any preceding claim, in which optical decoding means are provided for decoding a signal sensed by the optical means (2).

12. A method of reading data from or writing data to a substrate (9) including the steps of scanning optical indicia (10) on the substrate (9) whilst simultaneously reading or writing the data, processing the optical indicia (10) scanned in order to determine the position of the substrate (9) and controlling the reading or writing of data in dependence on the position of the substrate (9) so determined.

13. A method as claimed in claim 12, in which data is read from the substrate (9), processed in accordance with a desired transaction and the resultant processed data is written to the card as reading proceeds.

14. A method as claimed in claim 13, in which the data is read on travel of the substrate (9) in a first direction relative to a reading head (3) and the processed data written to the substrate (9) on that travel is verified when the substrate (9) is withdrawn in a direction opposite to the first direction.

15. A method as claimed in claim 12, 13 or 14, in which a duplicate set of data is read from and written to the substrate.

16. A method as claimed in claim 12, 13, 14 or 15, in which data is encrypted prior to writing to the substrate and decrypted on reading from the substrate.

17. A method as claimed in any of claims 12 to 16, in which a signal coded into the optical indicia (10) is decoded.

18. A substrate for use with data reading and/or writing apparatus comprising an area thereon for storing data and means for enabling the position of the substrate in the apparatus to be determined.

19. A substrate as claimed in claim 18, in which the means for enabling the position of the substrate to be determined comprises an optical panel (10).

0157042

20. A substrate as claimed in claim 19, in which
the optical panel (10) comprises a series of
parallel spaced stripes.

21. A substrate as claimed in claim 18, 19 or 20,
in which the means for enabling the position to be
determined bears a code identifying a characteristic
of the card.

22. A substrate as claimed in any of claims 18 to
21, in which the area of storing data comprises a
magnetic medium.

0157042

FIG.1

FIG.2

FIG.3

0157042

FIG.4

FIG.5

FIG. 6

4/5

-3B- -3A-

40

1.

2.

41

-3B- -3A-

40

41

**Fig. 7**

Time

'1'    '0'    '0'    '1'

**Fig. 9**

2w    w    w    2w    w    2w

E    E    E    E    E    E

**Fig. 10**

0157042

5/5

-50-

-51-

-ED-

9

FIG. 8

9

-50-

-51-

-DD-